# FASCICULE DE BREVET EUROPEEN

(11) **EP 1 161 565 B1**
(45) Date de publication et mention de la délivrance du brevet: **28.10.2009**
(21) Numéro de dépôt: 00909434.3
(22) Date de dépôt: 06.03.2000
(51) Int. Cl.: C14C 1/02

(54) **UTILISATION DE POLYMERES SUPERABSORBANTS POUR LE TRAITEMENT DES PEAUX BRUTES, COMPOSITIONS ET PROCEDE CORRESPONDANTS ET PEAUX AINSI TRAITEES**
VERWENDUNG VON STARK ABSORBIERENDEN POLYMEREN FÜR DIE BEHANDLUNG VON ROHHÄUTEN, ZUSAMMENSETZUNGEN UND ENTSPRECHENDES VERFAHREN UND SO BEHANDELTE HÄUTE
USE OF SUPERABSORBENT POLYMERS FOR TREATING RAW SKINS, CORRESPONDING COMPOSITIONS AND METHODS AND RESULTING TREATED SKINS

(30) Priorité: 11.03.1999 FR 9903139
(43) Date de publication de la demande: 12.12.2001
(73) Titulaire: SNF S.A., 42028 Saint-Etienne Cedex 1 (FR)
(72) Inventeur: BROSSE, Jacques, F-42320 La Grand Croix (FR); SABATIER, Bernard, F-42000 Saint-Etienne (FR)
(74) Mandataire: Richebourg, Michel François
(86) Numéro de dépôt international: PCT/FR2000/000553
(87) Numéro de publication internationale: WO 2000/053816

(56) Documents cités:
- EP-A- 0 410 862
- DE-A- 4 201 452
- US-A- 4 732 968
- BARRETT J.C.: "short-term preservation of hides in zimbabwe" JOURNAL OF THE SOCIETC OF LEATHER TECHNOLOGIES AND CHEMISTS, vol. 70, page 84 XP002120702 cité dans la demande & SWEET L. ET AL: "controlling water activity for short-term preservation of fresh cattlehide for collagen and leather production" JOURNAL OF THE AMERICAN LEATHER CHEMISTS ASSOCIATION, vol. 77, 1982, pages 193-203,
- DATABASE WPI Section Ch, Week 197517 Derwent Publications Ltd., London, GB; Class A97, AN 1975-28534W XP002137496 & SU 432 197 A (MOSCOW MEAT MILK IND INS), 5 novembre 1974 (1974-11-05)
- CHEMICAL ABSTRACTS, vol. 107, no. 20, 16 novembre 1987 (1987-11-16) Columbus, Ohio, US; abstract no. 178578k, XP002119532 & PL 134 175 A (FELICJANIAK B. ET AL) 31 mai 1986 (1986-05-31)

## Description

La présente invention concerne le secteur technique de la tannerie de peaux brutes d'animaux.

Le sel est d'usage courant pour la conservation des peaux. Les peaux sont traitées sur le lieu de leur obtention, notamment au niveau des abattoirs de bovins ou ovins ou animaux semblables, afin d'assurer leur conservation, c'est à dire leur non putréfaction par action bactérienne, durant plusieurs semaines.

L'objectif de la conservation de la peau fraîche, après abattage et dépouille des animaux de boucherie est d'empêcher les interactions entre les micro-organismes et la peau.

Deux voies permettent d'atteindre de façon absolue cet objectif :
- la stabilisation de la partie protéique de la peau,
- la destruction complète de la flore bactérienne.

La stabilisation ou tannage exige une certaine élaboration de la peau et conduit à un matériau bien caractérisé ; de plus, cette transformation doit être immédiate. Le contexte industriel actuel n'offre que peu de chance à la généralisation de ce système.

La destruction totale de la flore requiert la mise en oeuvre de moyens de stérilisation complète associés au maintien de la peau hors de toute source de contamination. Cette voie apparaît comme peu réaliste tant sur le plan pratique qu'économique.

Les méthodes de conservation de la peau fraîche actuellement employées reposent sur l'exploitation de facteurs qui ralentissent ou bloquent le développement des micro-organismes ainsi que l'effet sur la substance protéique.

Ces facteurs sont la température, le taux d'hydratation, le type et la concentration de produits adjuvants.

Le recours à la déshydratation reste la méthode la plus fréquemment utilisée et les procédés les plus universellement employés sont le salage et le saumurage et, à un degré moindre, le séchage. II existe aussi des méthodes combinant salage et séchage, mais d'emploi limité.

Le salage consiste à soumettre la peau fraîche à l'action déshydratante du sel commun (chlorure de sodium), le saumurage à celle d'une solution saline saturée.

Si la teneur en eau d'une peau fraîche se situe autour de 70 %, le degré d'hydratation après salage et égouttage diminue de 15 à 20 % et l'eau résiduelle d'imprégnation se sature en sel.

II se crée ainsi, en fonction du temps, des conditions impropres au développement bactérien, ce qui assure la conservation de la peau.

Dans le cas du salage, après 10 à 15 jours de séjour en pile, la peau fraîche salée peut être conditionnée et stockée dans des locaux appropriés en attendant son expédition.

Une peau fraîche salée contient normalement 15 % de sel pour une teneur en eau répartie de façon homogène dans l'épaisseur de 50 % environ.

Bien que paraissant simples et efficaces, ces méthodes conduisent à des résultats dont le niveau est grandement influencé par les conditions de préparation de la peau et le respect du mode opératoire de traitement.

Le séchage consiste à faire évaporer l'eau naturellement contenue dans la peau provoquant une déshydratation beaucoup plus importante que le salage. Les peaux brutes séchées sont bien plus légères que les peaux salées, ne contenant que 10 à 15 % d'eau. Stockées dans un local sec, elles peuvent se conserver assez longtemps dans la mesure où elles ont subi un traitement insecticide.

Contrairement au salage, le séchage, bien que conduisant à un produit stable, reste limité aux régions où les conditions climatiques permettent sa mise en oeuvre de façon naturelle, où lorsque le sel est rare et cher.

Le séchage est une opération délicate a conduire durant laquelle la peau peut subir d'importantes dégradations :
- sèche trop lente entraînant la putréfaction,
- sèche trop agressive favorisant la dénaturation des protéines de la peau.

Enfin la peau séchée est beaucoup plus difficile à mettre en fabrication.

La pratique du salage des peaux de bovins est réglementée par la norme NF G53-002 : « Règles de conservation par salage des peaux brutes de bovins et équidés ».

La présente norme détermine les conditions de salage en particulier la taille des cristaux de sel à utiliser selon les peaux à saler :
- pour les grosses peaux, un sel « tout venant » dont les cristaux passent à travers des tamis d'ouverture de mailles comprises entre 1,25 mm et 3,15 mm,
- pour les peaux de veaux, utiliser de préférence un sel « tout venant » dont les cristaux passent à travers des tamis de mailles comprises entre 0,4 mm et 1 mm.

Les peaux recouvertes uniformément de sel restent en pile pendant 15 jours au moins pour favoriser l'écoulement de la saumure résultant de la déshydratation.

D'autre part, il est établi par expérience, que pour assurer une bonne conservation des peaux en toutes saisons et en particulier en été, il faut employer 35 à 40 kg de sel pour 100 kg de peaux fraîches dans le cas de bovins adultes et 45 à 50 kg de sel dans le cas des peaux de veaux.

Le sel que l'on répand ainsi sur la peau fraîche, se dissout rapidement et il s'établit en surface, et suivant une faible profondeur du tissu sous-cutané une solution saline concentrée dont la pression osmotique est élevée.

L'eau qui se trouve à l'intérieur de la peau est attirée vers l'extérieur, tandis que le sel pénètre dans le liquide interfibrillaire ainsi qu'à l'intérieur du gel collagénique.

Outre l'absorption de sel par la peau, il y a déshydratation partielle de celle-ci.

L'homme de métier sait que le sel (NaCl en grains) a pour fonction de faire dégorger l'eau contenue dans la peau, probablement par action ionique qui chasse l'eau enfermée dans le collagène, principalement) mais remplit également une autre fonction tout à fait essentielle, à savoir réaliser un équilibre entre la protection contre les bactéries et l'humidité résiduelle qu'il est important de conserver à la peau.

En effet, dessécher totalement la peau conduirait à des inconvénients graves, tels que des décolorations irrégulières etc.... et à une modification de la souplesse qui nuiraient à la commercialisation, ainsi qu'à des attaques par les insectes.

C'est ainsi que, dans les procédés anciens où un séchage total est réalisé par l'action du soleil, il est obligatoire de réhumidifier les peaux au cours d'une longue opération.

La déshydratation de la matière première peau prise à l'état frais après dépouille des animaux à l'abattoir et destinée à l'industrie du cuir est une des méthodes permettant la conservation de la peau brute de l'abattage à la transformation en cuir. Le chlorure de sodium abondamment utilisé contribue à cet objectif mais est un des éléments majeurs de la pollution saline que la filière cuir se doit de réduire. L'utilisation de produits de substitution du chlorure de sodium rentre dans le schéma préventif d'une volonté de réduction de la charge polluante des effluents générés au cours des opérations de conditionnement de la peau fraîche, ainsi que celle des eaux résiduaires des industries de la tannerie-mégisserie.

Pour conserver les peaux brutes, l'industrie du cuir procède au salage humide.

La déshydratation partielle des peaux fraîches :
- réduit de 70 à 50 % la quantité d'eau contenue dans la peau (la teneur en eau passe de 70 à 50 %)
- assure la conservation des peaux entre l'abattage et sa transformation en cuir, par déshydratation et présence de sel (15 % du poids de la peau après déshydratation).
   Mais les quantités de sel nécessaires posent des problèmes, en particulier dans les régions où les ressources en eau sont limitées. De plus, les pays réglementent davantage ces rejets salés et, à moins d'utiliser les coûteuses techniques d'osmose inverse, les effluents salés qui résultent de la conservation ne peuvent être récupérés.
   Les normes futures seront de plus en plus sévères et interdiront pratiquement les traitements actuels, sauf à leur adjoindre des opérations supplémentaires coûteuses de récupération du sel et étapes analogues.
   Au Centre technique du cuir, on estime que seules les techniques de conservation par le froid positif (entre 2°C et 5°C) peuvent remplacer le salage. Le traitement à l'air refroidi permet d'abaisser la température des peaux en moins d'une heure à 5°C, mais nécessite des convoyeurs pour optimiser les échanges thermiques lors du refroidissement. Le procédé, mieux adapté aux gros débits, permet de conserver les peaux pendant quinze jours.
   La carboglace (glace de CO₂) peut aussi être utilisée. Elle refroidit en effet rapidement la surface et l'intérieur de la peau, et supprimer les étapes de réhumidification des peaux et de traitement de l'eau inhérente à l'usage d'une glace hydrique. Cette méthode étudiée en Nouvelle-Zélande permet de conserver de petites peaux pendant une période limitée de 48 heures environ.
   On rappellera ci-dessous les principales étapes du traitement d'une peau.

### 1 - CONSERVATION DE LA PEAU BRUTE

Le sel est utilisé pour capter l'eau dans le but d'améliorer la conservation de la peau.

### 2 - OPÉRATION DE RIVIERE

Les premières étapes du traitement du cuir sont surtout mécaniques :
1 - lavage (reverdissage)
2 - écharnage
3 - enchaucenage :
   On effectue un traitement chaux + sulfure sodium + carbonate de calcium pour dissoudre les racines des poils. Le carbonate de Ca est utilisé comme épaississant.
4 - pelain :
   On effectue un traitement à la chaux en bassin pour distendre les fibres de la peau ce qui permet une meilleure élimination des poils et le gonflement de la peau (3-5 mm épaisseur), avec obtention de la « peau en tripe ».
5 - refendage : égalisation de l'épaisseur de la peau (élimination côté chair).

### 3 - OPÉRATION DE TANNAGE

1 - pickelage : acidification en présence de sel (pH = 4,5) en tonneau.
2 - tannage : traitement au sel de chrome pour rendre la peau imputrescible et lui conférer une bonne résistance à la chaleur (100°C).
   On obtient ainsi le produit dénommé « wet blue » (bleu humide)
3 - mûrissement (repos de 24 heures)

### 4 - OPÉRATION DE RETANNAGE TEINTURE

1 - essorage : mécanique
2 - triage (choix)
3 - dérayage : mise à l'épaisseur définitive
4 - retannage teinture : en tonneau pour donner les caractères physiques et la teinte de fond. Des résines synthétiques, des huiles, des graisses, des colorants sont utilisés.
5 - séchage : en tunnel (70°C)

On obtient la « peau en croûte ».

### 5 - CORROYAGE

1 - réhumidification
2 - assouplissement ( au palisson)
3 - cadrage : mise à plat des peaux par étirement (emploi de pinces).

### 5 - FINISSAGE

Application par pistolet des solutions de : colorants, résines (acrylique ou polyuréthanne), liants, pigments... Autres opérations mécaniques : presse, lissage ...

### 6 - MAGASIN PRODUIT FINI

Triage qualité, mesure de la surface de chaque peau.

### 7 - CONTRÔLE LABORATOIRE

1 - contrôle des matières premières (produits chimiques)
2 - contrôle des propriétés physiques du cuir fini.

Le problème posé était donc de rechercher un nouvel agent et/ou un nouveau procédé de conservation des peaux brutes qui représente une amélioration notable par rapport au sel, notamment en termes d'environnement et de respect des normes futures de rejet de sel.

De nombreuses tentatives ont été menées.

Le brevet USP 4,902,298 propose une composition très complexe de chlorohydroxyde d'aluminium, de produits de condensation dicyandiamide - formaldéhyde à groupes méthylol libres, de sulphate de chrome et d'acide polyacrylique. La présence de proportions importantes de métaux comme le chrome et l'aluminium s'opposent à une évolution vers la protection de l'environnement, qui est la tendance marquée actuelle (cf. « Leather Manufacture and Ecology », Anton Mayer, JALCA, Vol. 81, 1986.)

On se référera également à « Preservation and Tanning of Animal Hides », W. Marmer, Eastern regional research center, Agricultural Research service, US Dpt. of Agri., Wyndmoor, PA, USA, qui indique que la toxicité du chrome soulève l'inquiétude concernant « tous les produits contenant du chrome » Ce même article évoque la possibilité de remplacer NaCl par KCl, en raison de l'inquiétude que soulève également le sodium (page 63).

Des associations de sel et de biocides ou antiseptiques ou chlorure de zinc, acide formique ou N-méthylolchloroacétamide ont été également tentées dans certains pays (« Short term preservation of hides in Zimbabwe », J.C. Barret, Jour. of Soc. of Leather Tech. and Chem., Vol. 70, page 83). Ce document indique également des associations complexes de sel NaCl avec des copolymères spécialement greffés de type spécifique amidon hydrolysé / polyacrylonitrile et de l'acide acétique, qui selon ce document ne sont pas rentables par rapport aux autres options visant à remplacer le sel par des agents moins polluants. Ce document confirme donc le préjugé qui existait concernant le coût prohibitif de toute tentative de substitution du NaCl.

Le brevet USP 4,834,763 utilise des associations de composés du chrome et d'agents de tannage synthétiques comme des produits de condensation de formaldéhyde, dérivés d'acide sulphonique, etc..., cf. col. 3.

Le document « Sweet L. et al. Journal of the american leather chemists association 193 77 (1982) » décrit l'utilisation d'un mélange de superabsorbants et de chlorure de sodium pour le traitement de conservation de peaux brutes d'animaux. Ce document recommande l'emploi de « flocons ».

R.G.H. Elliott (Jour. of the Soc. of Leather Techn. and Chem., Vol 67, page 31) établit une liste des traitements connus, les biocides, l'acide borique, des mélanges de sel-acide borique-naphtalène, antiseptiques, bactéricides, etc..... et souligne les problèmes de rejets de tels effluents, notamment de NaCl.

On a également proposé des résines aminées pour le cuir (Jour. Soc. Leather Techn. and Chem. Vol. 63 p 49, 2/79).

II a maintenant été découvert que certains (co)polymères superabsorbants ou SAP sont capables de remplacer le sel de conservation des peaux brutes, dans certaines conditions.

Dans ce qui suit, on utilisera le mot « polymère » pour désigner également les copolymères, terpolymères etc..... De même l'abréviation SAP désignera aussi bien les polymères surperabsorbants que les copolymères, terpolymères, etc.... et leurs mélanges.

Les superabsorbants sont des polymères bien connus dans la chimie fine, et de tels polymères sont par exemple décrits dans les brevets:
- USP 3,669,103 polymère faiblement réticulé tel que poly-N-vinylpyrrolidone, polyvinyltoluènesulfonate, polysulfoéthylacrylate, poly-2-hydroxyéthyle acrylate, poly-vinylméthyloxazolidinone, polyacrylamide hydrolisé, acide polyacrylique, copolymères d'acrylamide et d'acide acrylique, et sels de métal alcalin de tels polymères contenant des groupes sulfonate ou carboxy, notamment polyacrylamide partiellement hydrolisé, faiblement réticulé.
- FR 2 559 158 polymères réticulés de l'acide acrylique ou méthacrylique, copolymères greffés réticulés du type polysaccharide / acide acrylique ou méthacrylique, terpolymères réticulés du type acide acrylique ou méthacrylique / acrylamide / acrylamide sulfoné et leurs sels de métaux alcalino-terreux ou alcalins.

Ces polymères ont pour principale caractéristique une forte capacité à gonfler en milieu aqueux. Ils sont utilisés notamment en agriculture pour retenir l'eau dans les sols, dans les produits d'hygiène pour bébés destinés à contenir l'urine et applications analogues.

II a été découvert de manière surprenante que de tels superabsorbants sont capables, non seulement d'absorber l'eau contenue dans l'intérieur d'une peau (ce qui n'était pas évident car le polymère est appliqué en surface), mais aussi de laisser subsister une humidité résiduelle appropriée, ce qui était encore moins évident (en effet, dans l'art antérieur, on recherchait des superabsorbants pour leur capacité à absorber la quantité maximale d'eau, et non pas une partie seulement).

L'emploi des super absorbants selon l'invention réalise une nouvelle méthode de traitement de la peau fraîche évitant d'une part :
- au sein de l'abattoir,
   - la formation d'effluents chargés de chlorure de sodium, par rétention d'eau au cours des opérations de déshydratation, et le ruissellement de saumure,
   d'autre part :
   - au sein des tanneries-mégisseries,
      - la réduction de la charge polluante des effluents engendrés par les opérations de réhydratation de la peau brute salée au cours de sa transformation en cuir.

Par ailleurs, un autre mérite du demandeur est d'avoir cherché une solution au problème précité, à l'aide de superabsorbants, alors qu'il est évident que le coût des polymères en cause est de très loin supérieur à celui du sel, ce qui créait naturellement un fort préjugé contre l'emploi de tels polymères face à un produit de base aussi peu onéreux que le sel. II a cependant été découvert selon l'invention que les polymères superabsorbants de taille de particule inférieure à environ 6 mm, de préférence comprise entre 0,3 et 4 mm, de préférence, entre 0,5 et 3,15 mm, permettent de réduire considérablement (par un facteur d'environ 6 fois) le temps de traitement, avec pour résultat le fait de rétablir grandement l'équilibre économique du traitement par un polymère. En effet, les peaux peuvent tourner environ 6 fois plus vite dans les abattoirs, avec un gain très important en termes de rentabilité d'investissement, de réduction de stocks et de réduction des capacités frigorifiques. Par ailleurs, les polymères superabsorbants permettent de réduire considérablement la quantité d'eau de ruissellement ou « eau de réessuyage » ce qui représente encore des avantages importants en termes d'économie de traitement et d'investissement aussi bien que de respect de l'environnement. Enfin, les polymères permettent un traitement avant le transport vers la tannerie, avec une quantité d'eau moindre que la peau brute, d'où une réduction importante des coûts de transport. En fait, le traitement selon l'invention par les polymères SAP permet d'éliminer une importante fraction d'eau « piégée » dans le SAP, grâce à un simple brossage du SAP gonflé, avant expédition vers les tanneries. Ceci conduit à une réduction importante des coûts de transport, de l'ordre de 15%.

De plus, le tanneur a moins de sel à rejeter, avec un impact important sur l'économie du traitement et, naturellement, l'environnement, notamment au niveau des abattoirs.

Ainsi, il est apparu que l'emploi selon l'invention de polymères superabsorbants de taille de particule inférieure à environ 6 mm, de préférence comprise entre 0,3 et 4 mm, de préférence, entre 0,5 et 3,15 mm, correspondait, contrairement au préjugé antérieur, à un traitement économiquement réaliste.

Surtout, comme indiqué ci-dessus, l'invention permet le respect des normes futures en réduisant très fortement la quantité de sel à utiliser.

Cette réduction est de l'ordre de 30 à 80 % en poids environ, comme on le verra dans les exemples ci dessous.

Les polymères superabsorbants de taille de particule inférieure à environ 6 mm, de préférence comprise entre 0,3 et 4 mm, de préférence, entre 0,5 et 3,15 mm, que l'on peut utiliser selon l'invention sont tous les polymères de ce type capables d'absorber l'eau interne de la peau brute, lorsqu'on les dépose sur la surface de la peau, tout en laissant subsister l'humidité interne nécessaire à la bonne conservation de la peau.

On cherchera notamment à utiliser des polymères superabsorbants capables de laisser subsister une humidité résiduelle dans la peau comprise entre 20 et 70 % en poids, de préférence de l'ordre de 50 % en poids.

Les monomères que l'on pourra utiliser selon l'invention pour former des polymères superabsorbants appropriés sont les suivants, à titre non limitatif:
1. Monomères contenant des groupes de carboxyles: Acides mono ou polycarboxyliques à insaturation monoéthylénique, tel que l'acide (méth)acrylique (c'est à dire l'acide acrylique ou l'acide méthacrylique), l'acide maléique et l'acide fumarique.
2. Monomères contenant des groupes de type anhydride d'acide carboxylique: Acides anhydrides polycarboxyliques à insaturation monoéthylénique (tel que l'anhydride maléique).
3. Monomères contenant des sels d'acide carboxylique: Sels hydrosolubles (sels de métal alcalin, sels d'ammonium, sels d'amine, etc.) d'acides mono ou polycarboxylique à insaturation monoéthylénique (tel que le (méth)acrylate de sodium, (méth)acrylate de triméthylamine, (méth)acrylate de triéthanolamine, maléate de sodium, maléate de méthylamine).
4. Monomères contenant des groupes d'acide sulfonique: Acides vinylsulfoniques aliphatiques ou aromatiques (tels que l'acide vinylsulfonique, l'acide allylsulfonique, l'acide vinyltoluénesulfonique, acide sulfonique de styrène), acides sulfoniques (méth)acryliques (tel que le sulfopropyl (méth)acrylate, l'acide sulfonique de propyl de 2-hydroxy-3-(méth)acryloxyde.
5. Monomères contenant des groupes de sels d'acide sulfonique: Sels de métal alcalin, sels d'ammonium, sels d'amine de monomères contenant des groupes d'acides sulfoniques comme indiqué ci-dessus.
6. Monomères contenant des groupes d'hydroxyl : alcools à insaturation monoéthylénique (tels que l'alcool (méth)allyl), Les éthers ou esters de polyols à insaturation monoéthylénique (glycols d'alkylène, glycérol, polyols de polyoxyalkylène), tel que le (méth)acrylate d'hydroxyéthyl, le (méth)acrylate d'hydroxypropyl, le (méth)acrylate de triéthylène glycol, éther de mono (méth)allyl de poly(oxyéthylène oxypropylène) (dans lequel les groupes d'hydroxyl peuvent être éthérifiés ou estérifiés).
7. Monomères contenant des groupes d'amides: (méth)acrylamide, N-alkyl (méth)acrylamides (tels que le N-méthylacrylamide, N-hexylacrylamide), N, N-dialkyl (méth)acrylamides (tels que N, N-diméthylacrylamide, N,N-di-n-propylacrylamide), N-hydroxyalkyl (méth)acrylamides (tels que le N-méthylol(méth)acrylamide, N-hydroxyéthyl (méth)acrylamide), N,N-dihydroxyalkyl (méth)acrylamides (tels que le N,N-dihydroxyéthyl (méth)acrylamide), lactames de vinyl (tels que le N-vinylpyrrolidone).
8. Monomères contenant des groupes amino: esters contenant des groupes amino (par exemple des esters de dialkylaminoalkyl, esters de dihydroxyalkylaminoalkyl, esters de morpho-linoalkyl, etc.) d'acide mono ou di-carboxylique à insaturation monoéthylénique (tel que le (méth)acrylate de diméthylaminoéthyl, le (méth)acrylate de diéthylaminoéthyl, le (méth)acrylate de morpholinoéthyl, le fumarate de diméthyl aminoéthyl), des composés de vinyl hétérocyclique (tels que les pyridines de vinyl (par exemple 2-vinyl pyridine, 4-vinyl pyridine, N-vinyl pyridine), N-vinyl imidazol).
9. Monomères contenant des groupes des sels d'ammonium quaternaires : Sels de N,N,N-trialkyl-N-(méth)acryloyloxyalkylammonium (tels que le chlorure de N,N,N-triméthyl-N-(méth)acryloyloxyéthylammonium, chlorure de N,N,N-triéthyl-N--(méth)acryloyloxyéthylarnmonium, chlorure de triméthyl ammonium 2-hydroky-3-(méth)-acryloyl-oxypropyl).

De préférence:
- acrylamide, acide acrylique, acide méthacrylique, diméthylaminoéthyl acrylate sulfométhylé ou chlorométhylé,
- diméthylaminoéthylméthacrylate chlorométhylé ou sulfométhylé.

Des polymères superabsorbants de taille de particule inférieure à environ 6 mm, de préférence comprise entre 0,3 et 4 mm, de préférence, entre 0,5 et 3,15 mm, préférés selon l'invention sont les suivants:
- polyacrylamides réticulés
- polyacrylates réticulés
- copolymères réticulés acrylamide / acrylate
- copolymères acrylamide / diméthylaminoéthylacrylate (ADAME) sulfométhylés ou chlorométhylés
- copolymères acrylamide / diméthylaminoéthylméthacrylate (MADAME) sulfométhylés ou chlorométhylés.

Parmi les résines absorbant l'eau qu'on peut utiliser dans l'invention, on citera par exemple des polymères réticulés de l'acide acrylique ou de l'acide méthacrylique, des copolymères greffés et réticulés du type polysaccharide/acide acrylique ou méthacrylique, des copolymères ternaires réticulés acide acrylique ou méthacrylique/acrylamide/acrylamide sulfoné et leurs sels de métaux alcalins ou alcalino-terreux, par exemple les produits de réticulation d'un homopolymère de l'acide acrylique ou d'un sel de cet acide, de copolymères acide acrylique (ou sel de l'acide acrylique)/acide méthacrylique (ou sel de l'acide méthacrylique) et de copolymères greffés amidon/acide acrylique (ou sel de cet acide) ; des hydrolysats de copolymères greffés réticulés polysaccharide/acrylate ou méthacrylate d'alkyle, des hydrolysats de copolymères greffés réticulés polysaccharide/acrylonitrile, des hydrolysats de copolymères réticulés polysaccharide/acrylamide, par exemple des produits de réticulation de copolymères greffés amidon/acrylate d'éthyle hydrolysés, de copolymères greffés amidon/méthacrylate de méthyle hydrolysés, de copolymères greffés amidon/acrylonitrile hydrolysés, et de copolymères greffés amidon/acrylamide hydrolysés ; des hydrolysats de copolymères réticulés acrylate ou méthacrylate d'alkyle/acétate de vinyle, par exemple des produits de réticulation de copolymères hydrolysés méthacrylate d'éthyle/acétate de vinyle et de copolymères hydrolysés acrylate de méthyle/acétate de vinyle ; des hydrolysats de copolymères greffés réticulés amidoNacrylonitrile/acrylamide/acide 2-méthylpropane-sulfonique ; des hydrolysats de copolymères greffés réticulés amidon/acrylonitrile/acide vinylsulfonique ; de la carboxy-méthylcellulose sodique réticulée et des produits analogues. Ces produits peuvent être utilisés isolément ou en mélange entre eux.

Parmi les résines absorbant l'eau qui ont été mentionnées ci-dessus, on préfère les polymères réticulés de l'acide acrylique ou méthacrylique ; les copolymères greffés réticulés polysaccharide/acide acrylique ou méthacrylique, les copolymères ternaires réticulés acide acrylique ou méthacrylique/acrylamide/acrylamide sulfoné.

On pourra également utiliser des mélanges de superabsorbants, par exemple de granulométrie différente, ou de composition chimique différente, or de granulométrie et de composition chimique différentes.

Notamment, on pourra combiner au moins deux SAP de granulométries différentes adaptées pour obtenir une couverture optimale de la surface de la peau.

L'homme de métier saura sélectionner les polymères ou copolymères les mieux adaptés, ainsi que leurs mélanges, à l'aide de ses connaissances propres et éventuellement d'essais de routine, et de la description et des exemples de la présente demande.

II a également été découvert qu'il était essentiel de ne pas utiliser un superabsorbant seul, mais plutôt une combinaison d'un agent hydrophile ou hygroscopique comme le sel et de superabsorbant ou d'un mélange de superabsorbants.

En effet, un surperabsorbant utilisé seul produit un effet néfaste car il se forme une couche de surface qui bloque l'eau au voisinage de la surface de la peau. De plus, les couches profondes de l'épaisseur de la peau sont trop sèches, avec les inconvénients sérieux précités. Enfin, il se forme une frontière entre une zone très sèche interne et une zone très humide de surface, qui représente un milieu idéal pour la prolifération bactérienne.

Cet effet adverse était relativement prévisible, compte tenu des propriétés connues des superabsorbants, notamment leur pouvoir gonflant très puissant. II est probable que ce facteur a aussi dissuadé l'industrie considérée de rechercher l'emploi de ces produits.

Selon l'invention, on utilise donc des compositions contenant au moins un mélange de:
- au moins un (co)polymère superabsorbant de taille de particule inférieure à environ 6 mm, de préférence comprise entre 0,3 et 4 mm, de préférence, entre 0,5 et 3,15 mm ou SAP et de
- au moins un autre agent hygroscopique
- éventuellement des bactéricides, biocides, antiseptiques, des agents de conservation, et analogues.

Comme agents hygroscopiques additionnels, on citera:
- le sel
- CaCl2, MgCl2, KCl, et analogues connus de l'homme de métier.

L'agent hygroscopique préféré sera le sel NaCl.

On recherchera également les granulométries permettant une optimisation de l'homogénéisation du mélange agent hygroscopique / SAP.

Ici encore, l'homme de métier saura adapter les compositions de traitement en fonction des peaux et à l'aide, éventuellement, d'essais de routine. Notamment, et comme indiqué ci-dessus, des mélanges de SAP présentant des granulométries différentes pourront être utilisés, notamment en combinant une granulométrie fine avec une granulométrie plus grossière afin de réaliser une couverture optimale de la surface de la peau.

Les mélanges ou compositions selon l'invention pourront incorporer divers additifs comme des bactéricides, des agents de conservation, et analogues.

Notamment, l'emploi conjoint d'un bactéricide permet de réduire encore la proportion de sel dans le mélange.

D'autres caractéristiques et avantages de l'invention apparaîtront mieux à la lecture de la description et des exemples, qui sont donnés à titre non limitatifs.

### EXEMPLES

### Données de départ:

Poids de la peau :

| | |
|---|---|
| bovin : | 25 à 50 kg (70 % eau - 30 % matière) |
| veau : | 8 à 12 kg |

### EXEMPLE 1 Emploi de superabsorbant seul

Le polymère superabsorbant ou SAP utilisé est le produit AQUASORB 3005 KL (TM) commercialisé par le Demandeur, avec une granulométrie de 0,5 - 3,15 mm.

Il s'agit d'un copolymère de type acrylamide / acrylate réticulé préparé par polymérisation radicalaire.

Traitement de conservation:
400 g AQUASORB (TM) / kg de peau
Après 24 h de contact avec le superabsorbant appliqué côté chair, en couche homogène, la déshydratation est irrégulière dans l'épaisseur de la peau, et on constate une vitrification des couches externes de la peau.

La perte de poids constatée, de 20 %, correspond à l'effet de déshydratation souhaité mais l'absence d'homogénéité dans l'épaisseur de la peau ne permet pas d'envisager l'emploi de superabsorbant seul.

### EXEMPLE 2 Emploi d'un mélange chlorure de sodium et superabsorbant

Le superabsorbant retenu est le AQUASORB 3005 KL (TM) et permet de réaliser un mélange 50/50 avec du chlorure de sodium (pour NaCl, granulométries utilisées : 1,25 mm à 3,15 mm pour les parties adultes, 0,4 mm à 1 mm pour les peaux de veaux).

Traitement de conservation:
200 g AQUASORB (TM) / kg de peau
200 g de sel / kg de peau
on a constaté que le sel se fixe dans la peau, et on ne trouvera donc pas de sel pour les abattoirs dans les déchets.

Après 24 % la peau a perdu 20 % de poids et on obtient une peau prête pour le tanneur.

La quantité de mélange 50/50 en poids utilisée pour obtenir une couverture homogène de la peau est de 400 g de mélange / kg de peau fraîche (dans le cas de NaCl seul, la quantité utilisée est de 400 g NaCl / kg peau fraîche).

Dans cet exemple, la présence de sel permet une déshydratation sans «effet de surface».

L'emploi du mélange 50/50, sur la base de 400 g/kg peau fraîche permet de retrouver dans la peau déshydratée :
- une teneur en sel de 15 à 20 %
- un taux d'humidité ramené de 70 à 50 %.

### CONCLUSIONS

La peau fraîche traitée selon l'invention, et notamment avec le mélange 50/50 de NaCI et d'AQUASORB 3005 KL (TM) se trouve dans l'état habituellement rencontré dans les conditions industrielles actuelles (emploi de NaCl seul).

Cet état est observé après seulement 24 h de contact, sans ruissellement de saumure, par opposition aux 15 jours de « piles » nécessaires dans l'art antérieur pour éliminer par égouttage 20 % d'eau (par rapport au poids initial de la peau), chargée de sel (ce qui représente plus de 50 % du sel utilisé : 200 à 250 g/kg peau).

La conservation (stabilisation des bactéries) est assurée par déshydratation suffisante et présence de sel.

Les peaux ainsi traitées peuvent subir normalement les opérations de transformation au cuir en particulier la première ( réhydratation ) grâce à la présence de sel sous la peau.

Le superabsorbant et l'eau qu'il contient doit être éliminé de la surface des peaux et ne doit pas accompagner les peaux chez le tanneur, mais ceci s'effectue facilement par simple brossage.

### On a également réalisé les essais suivants:

### PRÉAMBULE EXPÉRIMENTAL

Les essais de déshydratation sur peau de bovin avec emploi de super absorbants sont réalisés à partir de peau de velle fraîche, d'un poids frais moyen de 25 kg, en provenance de la société du marché aux cuirs de Lyon et de sa région (69 Corbas).

### A - TENEUR EN EAU DE LA PEAU FRAÎCHE

Le degré d'hydratation des peaux utilisées est calculé à partir de 3 échantillons de peau fraîche, séchés 24 heures à l'étuve à 105°C (Tableau 1).

Le degré d'humidité des peaux sera pris entre 65 et 70 %.

La dispersion des valeurs trouvées se justifie par la présence plus ou moins abondante des poils sur les échantillons prélevés.

### B - PRODUITS ABSORBANTS TESTÉS

Trois produits super absorbants sont testés comme agents de déshydratation des peaux fraîches : ils seront désignés par les références: produits A, B, C.
Produit A : AQUASORB 3005 KM,
Produit B : AQUASORB 3005 KL,
Produit C : PR 3005 A,
commercialisés par le Déposant SNF SA.
Caractéristiques granulométriques :
Produit A : grain fin
Produit B : grain moyen
Produit C : gros grain.

### C - CONDITIONS EXPÉRIMENTALES

Les surfaces de peaux traitées sont découpées à partir des peaux de velles fraîches entières.

Les échantillons ont une surface de 50 x 50 cm.

Les produits absorbants utilisés en quantité déterminée (par rapport au poids de peau traitée) sont étalés en couche uniforme soit sur un support inox pour un contact de la chair avec le produit déshydratant, soit directement sur le côté chair par saupoudrage.

Les échantillons ainsi traités sont laissés au repos à température ambiante pour la durée de l'essai, et protégés contre l'évaporation par un film plastique.

### ÉVOLUTION DE LA DÉSHYDRATATION DANS LE TEMPS

### A - CHOIX DU SUPER ABSORBANT

Les trois produits A, B, C, sont testés.

A chaque échantillon de peau correspond un poids de super absorbant identique au poids de peau fraîche.
1 ère série d'essais : le super absorbant est étalé en couche homogène sur le support inox et sur une surface de 50 x 50 cm, les échantillons de peau sont en contact avec le produit absorbant par le côté chair (le côté poils de la peau étant apparent).
2ème série d'essais : l'échantillon de peau est en contact avec le support inox par le côté poils, le super absorbant est alors saupoudré côté chair en couche homogène.

Pour les deux séries d'essais, les échantillons de peau restent en contact 24 heures.

Les résultats (Tableau 2) montrent que pour toute granulométrie de super absorbant, la perte en poids de la peau fraîche est comprise entre 24,24 et 27,54 % soit pour une peau fraîche initialement à 67,5 % d'humidité : un degré d'humidité ramené entre 40 et 43 % d'eau.

L'humidité de la peau fraîche ainsi déshydratée serait inférieure à celle généralement constatée après salage et stockage dans les conditions industrielles.

**OBSERVATIONS :** La déshydratation, quel que soit l'absorbant utilisé (produit A, B ou C) n'est pas homogène dans l'épaisseur de la peau. En effet, il est possible d'observer une vitrification côté chair de la peau, conséquence du très fort pouvoir absorbant utilisé dans les conditions définies dans les deux séries d'essais ci-dessus.

Cet effet déshydratant très marqué entraîne une rigidité excessive de la peau qui nuit à sa manipulation au cours du pliage avant stockage.

Les résultats de ces deux séries d'essais ne montrent pas de différence significative de la quantité d'eau absorbée par les différents produits A, B ou C, et par la position du super absorbant (peau placée sur le super absorbant ou dessous : 24,53 à 27,54 % dans le premier cas contre 24,24 à 27,54 % dans le second. Même si le déplacement de l'eau doit être supérieur par effet d'égouttage, lorsque la peau est posée par le côté chair sur le super absorbant, après 24 heures de contact, cet effet n'entraîne pas de variation significative dans la perte en eau de la peau, compte tenu de la dispersion des valeurs calculées de la perte en eau, l'absorption de l'eau par les différents super absorbants s'étant stabilisée au cours des 24 heures. Dans les deux séries d'essais, l'effet de blocage constaté suite à la déshydratation excessive de la couche externe de la peau conduit à un équilibre.

Cette déshydratation très poussée côté chair, que d'une part bloque le déplacement de l'eau vers le super absorbant, serait néfaste à une reprise en eau homogène de la peau au cours des premières opérations de réhydratation effectuées pendant les opérations de transformation de la peau en cuir.

Au cours des manipulations, en particulier au moment de la séparation du super absorbant pour peser la peau déshydratée :
- le produit A (grains fins) est le plus difficile à éliminer par balayage, sa fine granulométrie lui conférant un caractère gel trop marqué.
- Pour les produits B et C, (grains moyens à gros), l'absence de « collant » permet de séparer le produit absorbant de la peau avant d'effectuer la seconde pesée.

Le grain moyen (produit B - Aquasorb 3005 KL) est retenu pour son comportement au cours des manipulations et sa granulométrie voisine de celle du sel utilisé permettrait le mélange des deux produits (super absorbant et chlorure de sodium) avant application sur la peau.

D'autre part, l'emploi de différentes quantités d'Aquasorb 3005 KL, utilisé pour couvrir complètement par saupoudrage la surface de peau fraîche à déshydrater, conduit à retenir une quantité de super absorbant de 400 g par kg de peau fraîche. En effet :
- au-dessous de 400 g/kg, la couverture de la peau n'est pas homogène,
- au-dessus la quantité de super absorbant serait en excès.

### Au cours des essais suivants il sera successivement étudié :

- l'évolution de la déshydratation dans le temps,
- l'emploi du mélange super absorbant et chlorure de sodium.

Dans tous les cas le super absorbant ou le mélange super absorbant / chlorure de sodium sera appliqué par saupoudrage côté chair de la peau, ce qui restitue les conditions opératoires du salage.

### B - UTILISATION DU SUPER ABSORBANT SEUL

Ayant retenu l'application par saupoudrage côté chair de la peau fraîche avec 400 g/kg de peau fraîche, et sélectionné l'Aquasorb 3005 KL, une série d'essais est réalisée pour suivre la déshydratation dans le temps.

En Tableau 3 figurent les résultats des essais réalisés :
- sur le même échantillon de peau pesé après 24, 48, 72 et 96 heures. Avant chaque pesée la peau est débarrassée du super absorbant, réservé pendant le temps de la pesée, et saupoudré à nouveau pour une durée de contact supplémentaire de 24 heures.

Pour suivre également la perte en eau occasionnée par les manipulations et l'évaporation au cours de ces manipulations, deux autres séries d'essais sont menées en parallèle pour lesquels les échantillons de peau ne sont pesés respectivement qu'après 48 et 72 heures, puis chaque 24 heures jusqu'à 96 heures de contact.

Dans chaque série d'essais la déshydratation se poursuit pendant toute la durée de contact.

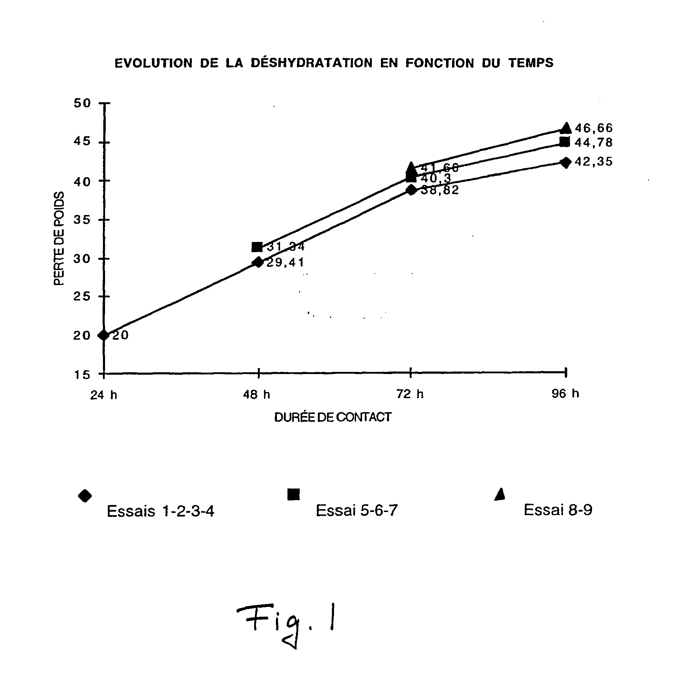

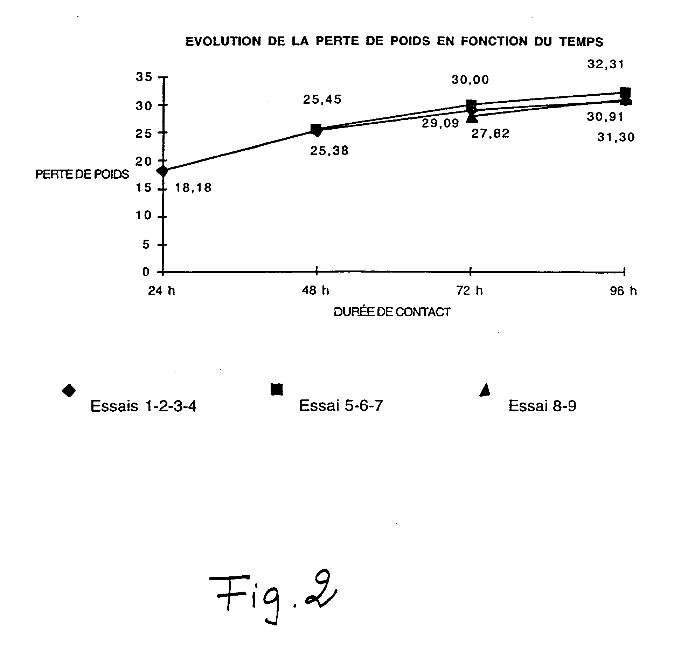

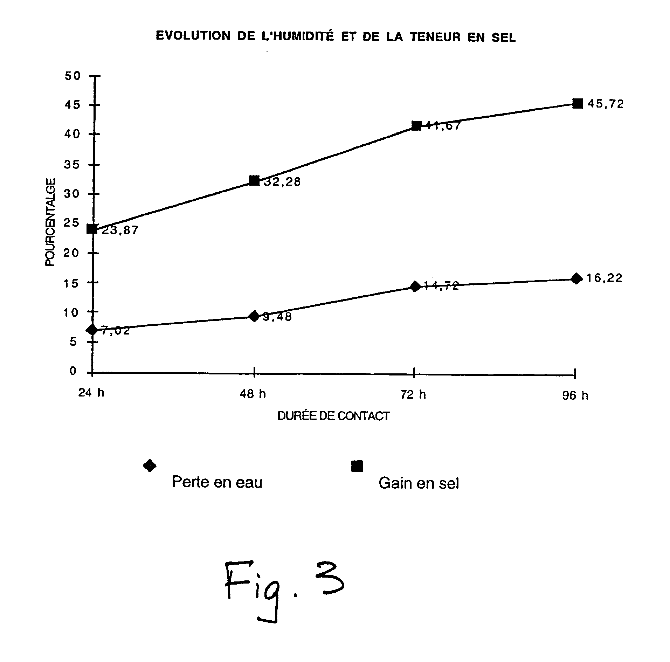

Les résultats ont été rassemblés sur les **figures 1****,** **2** **et** **3** annexées.

Les essais 1-2-3 et 4 sont réalisés sur le 1er échantillon de peau, de poids initial connu et repesé après 24, 48, 72 et 96 heures de contact avec l'Aquasorb 3005 KL et après balayage.

Les essais 5-6 et 7 sont réalisés sur le 2ème échantillon de peau, de poids initial connu et repesé après 48, 72 et 96 heures de contact avec l'Aquasorb 3005 KL et après balayage.

Les essais 8 et 9 sont réalisés sur le 3ème échantillon de peau, de poids initial connu et repesé après 72 et 96 heures de contact avec l'Aquasorb 3005 KL et après balayage.

Une perte supplémentaire allant jusqu'à 2,5 % est effectivement constatée lorsque l'échantillon est pesé après une durée de contact identique mais sans balayage et nouveau saupoudrage intermédiaires.

La perte d'eau, de 24,70 % après 24 heures de contact, obtenue avec 400 g de super absorbant par kg de peau fraîche est inférieure à celle initialement déterminée (25,37/26,98) avec emploi d'un poids de super absorbant identique à celui de l'échantillon de peau fraîche. De plus, avec emploi de 400 g/kg, l'effet de déshydratation massif des couches externes de la peau n'est pas aussi marqué qu'avec l'emploi d'une quantité de super absorbant supérieure.

Pour placer la peau fraîche en état de conservation, c'est-à-dire réduire son taux d'humidité de 25 %, il ne faudrait que 24 heures, comparativement aux 10 à 15 jours d'égouttage nécessaires dans le cas du salage seul.

Pour limiter la perte en eau de la peau au cours des 24 premières heures de contact avec l'Aquasorb 3005 KL, l'addition de chlorure de sodium au super absorbant est testée ci-après.

### C - UTILISATION DU MÉLANGE AQUASORB 3005 KL / CHLORURE DE SODIUM

L'objectif de cet essai est de suivre l'évolution dans le temps de la déshydratation de la peau fraîche en employant une quantité égale d'Aquasorb 3005 KL et de chlorure de sodium pour un total de 400 g/kg de peau fraîche.

Les résultats des essais, en Tableau 4, permettent de suivre la perte en poids de la peau au cours de sa déshydratation.

La perte en poids de l'échantillon balayé ne représente pas directement la perte en eau de la peau, mais la résultante entre la déshydratation de la peau et son absorption de sel.

De la même manière le Tableau 5 permet de suivre la variation de l'humidité de la peau en cours de déshydratation ainsi que son gain en sel.

### CONCLUSIONS

D'une manière générale, les trois produits Aquasorb (TM) peuvent se substituer avantageusement au chlorure de sodium pour la déshydratation de la peau fraîche de bovin.

Pour des raisons pratiques la sélection parmi les trois produits testés est basée sur la granulométrie qui favorise d'une part la couverture homogène du côté chair de la peau, et son élimination par balayage. La granulométrie de l'Aquasorb 3005 KL : 0,5 - 3,15 est du même ordre que celle du chlorure de sodium : 0,4 - 3,15, utilisé industriellement.

L'utilisation d'un mélange Aquasorb 3005 KL / chlorure de sodium, permet d'éviter la déshydratation trop rapide que l'on remarque avec emploi de super absorbant seul.

La quantité de mélange Aquasorb 3005 KL / chlorure de sodium est basée sur la quantité de produit nécessaire à couvrir de façon homogène le côté chair de la peau : 400 g/kg de peau fraîche de bovin adulte. Le mélange 50/50 peut être modifié pour régler le taux d'humidité résiduelle de la peau déshydratée, ainsi que la teneur en sel de cette même peau.

Si le chlorure de sodium est utilisé habituellement pour son faible coût et son « pouvoir antiseptique » aux concentrations présentes dans la peau, d'autres additifs au super absorbant sont envisageables :
- produits hygroscopiques permettant de limiter la déshydratation de la peau fraîche,
- bactéricides pour protéger la peau déshydratée pendant son stockage.

L'objectif étant toujours de réduire de 20 % le degré d'humidité de la peau fraîche, et de préserver cette peau de tout développement bactérien pendant le stockage avant transformation en cuir.

Les essais ont été réalisés comme indiqué initialement, sur des échantillons prélevés sur des peaux de velles de 25 kg. Les résultats tirés de ces essais sont propres à cette catégorie de peau. Les peaux étant commercialisées par catégorie en poids (un lot de peaux étant caractérisé par le poids moyen des peaux : la raie), les résultats peuvent varier d'une catégorie à l'autre, dans les limites des rapports poids / surface des peaux. En général les chiffres liés à la déshydratation des peaux sont des moyennes connues à partir d'observations faites sur des raies différentes, ce n'est que dans ce cas que l'on peut associer un intervalle de confiance aux valeurs annoncées.

### Tableau 1

### TENEUR EN EAU DES PEAUX DE BOVINS

- calculée par mesure de la perte en poids d'un échantillon de peau fraîche au cours d'un séjour de 24 heures à l'étuve à 105°C.
- degré d'humidité moyen : 67,54 %.

### Tableau 2

### COMPORTEMENT DES SUPER ABSORBANTS VIS A VIS DE LA PEAU FRAÎCHE

La perte en eau de la peau de bovin fraîche est calculée après mesure de la perte en poids de la peau fraîche restée 24 heures en contact avec le super absorbant.

### 1ère série d'essais :

Un poids de super absorbant, identique au poids de l'échantillon de peau prélevé est étalé en couche homogène de 50 x 50 cm sur un support inox. La peau est mise en contact avec le super absorbant par le côté chair.

### 2ème série d'essais :

Les échantillons de peau fraîche de 50 x 50 cm sont placés sur le support inox, en contact par le côté poils ; le produit absorbant d'un poids égal à celui de l'échantillon de peau fraîche, est saupoudré sur le côté chair de la peau.

### Tableau 3

### ÉVOLUTION DE LA DÉSHYDRATATION DANS LE TEMPS AVEC UTILISATION DE SUPER ABSORBANT SEUL

A - Utilisation du même échantillon de peau fraîche pour suivre l'évolution de la déshydratation dans le temps après balayage et réemploi du super absorbant, sur la base de 400 g/kg de peau fraîche.
B - Utilisation de deux autres échantillons de peau fraîche pour n'effectuer les secondes pesées que 48 ou 72 heures après le début de l'essai, évitant ainsi les pertes par manipulation et évaporation.

### Tableau 4

ÉVOLUTION DANS LE TEMPS DE LA PERTE EN POIDS DE LA PEAU AVEC UTILISATION DU MÉLANGE SUPER ABSORBANT / CHLORURE DE SODIUM
A - Utilisation du même échantillon de peau fraîche pour suivre l'évolution de la déshydratation dans le temps après balayage et réemploi du mélange absorbant, sur la base de 400 g/kg de peau fraîche (200 g Aquasorb 3005 KU200 g. NaCl).
B - Utilisation de deux autres échantillons de peau fraîche pour n'effectuer les secondes pesées que 48 ou 72 heures après le début de l'essai, évitant ainsi les pertes par manipulation et évaporation.

### Tableau 5

### ÉVOLUTION DANS LE TEMPS DE :

- L'HUMIDITÉ DE LA PEAU EN COURS DE DÉSHYDRATATION
- LA QUANTITÉ DE SEL DANS LA PEAU
AVEC UTILISATION DU MÉLANGE SUPER ABSORBANT/ CHLORURE DE SODIUM

Utilisation du même échantillon de peau fraîche pour suivre l'évolution de la déshydratation dans le temps après balayage et réemploi du mélange super absorbant / chlorure de sodium, sur la base de 400 g/kg de peau fraîche.

Après chaque période de contact, un échantillon de peau de 5 x 5 cm est prélevé et séché à l'étuve à 105°C pendant 24 heures.

En même temps le gain en sel est déterminé: après déshydratation de l'échantillon ayant servi à la détermination de l'humidité, le prélèvement est calciné pour déterminer la teneur en chlorure de sodium.

### L'invention concerne encore:

- les compositions pour le traitement de conservation des peaux brutes d'animaux selon l'une quelconque des revendications 1 à 24, **caractérisées en ce qu'**elles contiennent les superabsorbants et agent hygroscopique suivants:
NaCl + SAP 1
   (polyacrylate réticulé ; granulométrie 0,5 - 3 mm ) ou
SAP 2
   (polyacrylate réticulé ; granulométrie 100 - 800 microns ) ou
SAP 1 + SAP 2
   (polyacrylate réticulé + copolymère acrylamide / acrylate, réticulé, granulométrie 0,1 à 3 mm ) ou
SAP 3
   (copolymère acrylamide, MADAME chlorométhylé, réticulé granulométrie 0,5 - 3 mm) ou
SAP 4
   (copolymère acrylamide, ADAME chlorométhylé, réticulé granulométrie 0,5 - 3 mm)

- les compositions pour le traitement de conservation des peaux brutes d'animaux selon l'une quelconque des revendications 1 à 25, **caractérisées en ce qu**'elles contiennent les agents suivants:

| | | |
|---|---|---|
| **SAP** | Aquasorb 3005 KL (TM) | acrylamide / acrylate réticulé |
| | | 200 g / kg de peau |
| **NaCl** | | 200 g / kg de peau. |

- un procédé pour le traitement de conservation des peaux brutes d'animaux **caractérisé en ce qu'**il comprend au moins une étape de mise en contact de la peau avec une composition de conservation comme décrit ci dessus.
- un procédé pour le traitement de conservation des peaux brutes d'animaux , **caractérisé en ce qu'**il comprend au moins une étape de mise en contact de la peau, sur la face opposée aux poils, avec une composition de conservation comme décrit ci dessus.
- un procédé pour le traitement de conservation des peaux brutes d'animaux, **caractérisé en ce que** la mise en contact est effectuée durant environ 24 h.
- les peaux d'animaux, **caractérisées en ce qu**'elles ont été traitées, pour la conservation, par une composition comme décrit ci-dessus.
- les peaux d'animaux, **caractérisées en ce qu**'elles ont été traitées, pour la conservation, par un procédé comme décrit ci-dessus.
- l'utilisation de polymère(s) superabsorbant(s) SAP pour la conservation des peaux d'animaux.
- l'utilisation de polymère(s) superabsorbant(s) SAP et d'un ou plusieurs agent(s) hygroscopique(s) pour la conservation des peaux d'animaux.

## Revendications

1. Compositions pour le traitement de conservation des peaux brutes d'animaux, **caractérisées en ce qu'**elles contiennent au moins un mélange de:
- au moins un (co)polymère superabsorbant de taille de particule inférieure à environ 6 mm, de préférence comprise entre 0,3 et 4 mm, de préférence, entre 0,5 et 3,15 mm, capable d'absorber l'eau interne de la peau brute, lorsqu'on le dépose sur la surface de la peau, tout en laissant subsister l'humidité interne nécessaire à la bonne conservation de la peau, et de
- au moins un autre agent hydrophile,
- éventuellement des bactéricides, des agents de conservation, et analogues,
et **en ce que** les monomères utilisés pour former des polymères superabsorbants appropriés sont choisis parmi les suivants
(1). Monomères contenant des groupes de carboxyles: Acides mono ou polycarboxyliques à insaturation monoéthylénique, tel que l'acide (méth)acrylique (c'est à dire l'acide acrylique ou l'acide méthacrylique), l'acide maléique et l'acide fumarique.
(2). Monomères contenant des groupes de type anhydride d'acide carboxylique: Acides anhydrides polycarboxyliques à insaturation monoéthylénique (tel que l'anhydride maléique).
(3). Monomères contenant des sels d'acide carboxylique: Sels hydrosolubles (sels de métal alcalin, sels d'amonium, sels d'amine, etc.) d'acides mono ou polycarboxylique à insaturation monoéthylénique (tel que le (méth)acrylate de sodium, (méth)acrylate de triméthylamine, (méth)acrylate de triéthanolamine, maléate de sodium, maléate de méthylamine).
(4). Monomères contenant des groupes d'acide sulfonique: Acides vinylsulfoniques aliphatiques ou aromatiques (tels que l'acide vinylsulfonique, l'acide allylsulfonique, l'acide vinyltoluénesulfonique, acide sulfonique de styrène), acides sulfoniques (méth)acryliques (tel que le sulfopropyl (méth)acrylate, l'acide sulfonique de propyl de 2-hydroxy-3-(méth)acryloxyde.
(5). Monomères contenant des groupes de sels d'acide sulfonique: Sels de métal alcalin, sels d'amonium, sels d'amine de monomères contenant des groupes d'acides sulfoniques comme indiqué ci-dessus.
(6). Monomères contenant des groupes d'hydroxyl : alcools à insaturation monoéthylénique (tels que l'alcool (méth)allyl), Les éthers ou esters de polyols à insaturation monoéthylénique (glycols d'alkylène, glycérol, polyols de polyoxyalkylène), tel que le (méth)acrylate d'hydroxyéthyl, le (méth)acrylate d'hydroxypropyl, le (méth)acrylate de triéthylène glycol, éther de mono (méth)allyl de poly(oxyéthylène oxypropylène) (dans lequel les groupes d'hydroxyl peuvent être éthérifiés ou estérifiés).
(7). Monomères contenant des groupes d'amides: (méth)acrylamide, N-alkyl (méth)acrylamides (tels que le N-méthylacrylamide, N-hexylacrylamide), N, N-dialkyl (méth)acrylamides (tels que N, N-diméthylacrylamide, N,N-di-n-propylacrylamide), N-hydroxyalkyl (méth)acrylamides (tels que le N-méthylol(méth)acrylamide, N-hydroxyéthyl (méth)acrylamide), N,N-dihydroxyalkyl (méth)acrylamides (tels que le N,N-dihydroxyéthyl (méth)acrylamide), lactames de vinyl (tels que le N-vinylpyrrolidone).
(8). Monomères contenant des groupes amino: esters contenant des groupes amino (par exemple des esters de dialkylaminoalkyl, esters de dihydroxyalkylaminoalkyl, esters de morpho-linoalkyl, etc.) d'acide mono ou di-carboxylique à insaturation monoéthylénique (tel que le (méth)acrylate de diméthylaminoéthyl, le (méth)acrylate de diéthylaminoéthyl, le (méth)acrylate de morpholinoéthyl, le fumarate de diméthyl aminoéthyl), des composés de vinyl hétérocyclique (tels que les pyridines de vinyl (par exemple 2-vinyl pyridine, 4-vinyl pyridine, N-vinyl pyridine), N-vinyl imidazol).
(9). Monomères contenant des groupes des sels d'ammonium quaternaires : Sels de N,N,N-trialkyl-N-(méth)acryloyloxyalkylammonium (tels que le chlorure de N,N,N-triméthyl-N-(méth)acryloyloxyéthylammonium, chlorure de N,N,N-triéthyl-N-(méth)acryloyloxyéthylammonium, chlorure de triméthyl ammonium 2-hydroxy-3-(méth)-acryloyl-oxypropyl).

2. Compositions pour le traitement de conservation des peaux brutes d'animaux selon la revendication 1, **caractérisées en ce que** les polymères superabsorbants utilisés sont ceux capables d'absorber l'eau interne de la peau brute, lorsqu'on les dépose sur la surface de la peau, tout en laissant subsister l'humidité interne nécessaire à la bonne conservation de la peau.

3. Compositions pour le traitement de conservation des peaux brutes d'animaux selon la revendication 1 ou 2, **caractérisées en ce que** les polymères superabsorbants utilisés sont ceux capables d'absorber l'eau interne de la peau brute, lorsqu'on les dépose sur la surface de la peau, tout en laissant subsister une humidité résiduelle dans la peau comprise entre 20 et 70 % en poids, de préférence de l'ordre de 50 % en poids.

4. Compositions pour le traitement de conservation des peaux brutes d'animaux selon l'une quelconque des revendications 1 à 3, **caractérisées en ce que** les monomères utilisés pour former des polymères superabsorbants appropriés sont choisis parmi les suivants:
- acrylamide, acide acrylique, acide méthacrylique, diméthylaminoéthyl acrylate sulfométhylé ou chlorométhylé,
- diméthylaminoéthylméthacrylate chlorométhylé ou sulfométhylé.

5. Compositions pour le traitement de conservation des peaux brutes d'animaux selon l'une quelconque des revendications 1 à 4, **caractérisées en ce que** les les polymères superabsorbants sont choisis parmi les suivants:
- polyacrylamides réticulés
- polyacrylates réticulés
- copolymères réticulés acrylamide / acrylate
- copolymères acrylamide / diméthylaminoéthylacrylate (ADAME) sulfométhylés ou chlorométhylés
- copolymères acrylamide / diméthylaminoéthylméthacrylate (MADAME) sulfométhylés ou chlorométhylés.
- des polymères réticulés de l'acide acrylique ou de l'acide méthacrylique, des copolymères greffés et réticulés du type polysaccharide/acide acrylique ou méthacrylique, des copolymères ternaires réticulés acide acrylique ou méthacrylique/acrylamide/acrylamide sulfoné et leurs sels de métaux alcalins ou alcalino-terreux, par exemple les produtis de réticulation d'un homopolymère de l'acide acrylique ou d'un sel de cet acide, de copolymères acide acrylique (ou sel de l'acide acrylique)/acide méthacrylique (ou sel de l'acide méthacrylique) et de copolymères greffés amidon/acide acrylique (ou sel de cet acide) ;
- des hydrolysats de copolymères greffés réticulés polysaccharide/acrylate ou méthacrylate d'alkyle, des hydrolysats de copolymères greffés réticulés poly-saccharide/acrylonitrile,
- des hydrolysats de copolymères réticulés polysaccharide/acrylamide, par exemple des produits de réticulation de copolymères greffés amidon/acrylate d'éthyle hydrolysés, de copolymères greffés amidon/méthacrylate de méthyle hydrolysés, de copolymères greffés amidon/acrylonitrile hydrolysés, et de copolymères greffés amidon/acrylamide hydrolysés ;
- des hydrolysats de copolymères réticulés acrylate ou méthacrylate d'alkyle/acétate de vinyle, par exemple des produits de réticulation de copolymères hydrolysés méthacrylate d'éthyle/acétate de vinyle et de copolymères hydrolysés acrylate de méthyle/acétate de vinyle ;
- des hydrolysats de copolymères greffés réticulés amidon/acrylonitrile/acrylamide/acide 2-méthylpropane-sulfonique ;
- des hydrolysats de copolymères greffés réticulés amidon/acrylonitrile/acide vinylsulfonique ; de la carboxy-méthylcellulose sodique réticulée et des produits analogues, et leurs mélanges, de préférence:
- les polymères réticulés de l'acide acrylique ou méthacrylique ; les copolymères greffés réticulés polysaccharide/acide acrylique ou méthacrylique, les copolymères ternaires réticulés acide acrylique ou méthacrylique/acrylamide/acrylamide sulfoné.

6. Compositions pour le traitement de conservation des peaux brutes d'animaux selon l'une quelconque des revendications 1 à 5, **caractérisées en ce qu'**elles comprennent des mélanges de superabsorbants tels que décrits ou obtenus dans les revendications 1 à 5.

7. Compositions pour le traitement de conservation des peaux brutes d'animaux selon l'une quelconque des revendications 1 à 6, **caractérisées en ce qu'**elles comprennent des mélanges de superabsorbants tels que décrits dans les revendications 1 à 5, de granulométries différentes adaptées pour obtenir une couverture optimale de la surface de la peau.

8. Compositions pour le traitement de conservation des peaux brutes d'animaux selon l'une quelconque des revendications 1 à 7, **caractérisées en ce qu'**elles comprennent des mélanges de superabsorbants tels que décrits dans les revendications 1 à 5, de composition chimique différente.

9. Compositions pour le traitement de conservation des peaux brutes d'animaux selon l'une quelconque des revendications 1 à 8, **caractérisées en ce qu'**elles comprennent des mélanges de superabsorbants tels que décrits dans les revendications 1 à 5, de granulométrie et de composition chimique différente.

10. Compositions pour le traitement de conservation des peaux brutes d'animaux selon l'une quelconque des revendications 1 à 9, **caractérisées en ce qu'**elles comprennent des mélanges de superabsorbants tels que décrits dans les revendications 1 à 9, et au moins un agent hydrophile ou hygroscopique.

11. Compositions pour le traitement de conservation des peaux brutes d'animaux selon l'une quelconque des revendications 1 à 10, **caractérisées en ce qu'**elles comprennent comme agent hygroscopique le sel NaCl.

12. Compositions pour le traitement de conservation des peaux brutes d'animaux selon l'une quelconque des revendications 1 à 11, **caractérisées en ce qu'**elles comprennent comme agent hygroscopique - CaCl2, MgCl2, KCI.

13. Compositions pour le traitement de conservation des peaux brutes d'animaux selon l'une quelconque des revendications 1 à 12, **caractérisées en ce que** les proportions entre le polymère superabsorbant et l'autre ou les autres agents hygroscopiques seront établies entre 80 et 20 % en poids

14. Compositions pour le traitement de conservation des peaux brutes d'animaux selon l'une quelconque des revendications 1 à 13, **caractérisées en ce que** les proportions entre le polymère superabsorbant et l'autre ou les autres agents hygroscopiques seront établies entre 65 et 35 % en poids.

15. Compositions pour le traitement de conservation des peaux brutes d'animaux selon l'une quelconque des revendications 1 à 13, **caractérisées en ce que** les proportions entre le polymère superabsorbant et l'autre ou les autres agents hygroscopiques seront établies autour de 50 / 50% en poids.

16. Compositions pour le traitement de conservation des peaux brutes d'animaux selon l'une quelconque des revendications 1 à 15, **caractérisées en ce que** les polymères superabsorbants présentent une taille de particule inférieure à environ 6 mm et de préférence comprise entre 0,3 et 4 mm.

17. Compositions pour le traitement de conservation des peaux brutes d'animaux selon l'une quelconque des revendications 1 à 16, **caractérisées en ce que** les polymères superabsorbants présentent une taille de particule comprise entre 0,5 et 3 mm.

18. Compositions pour le traitement de conservation des peaux brutes d'animaux selon l'une quelconque des revendications 1 à 17 **caractérisées en ce que** les polymères superabsorbants présentent une taille de particule autour de 0,3 à 1 mm..

19. Compositions pour le traitement de conservation des peaux brutes d'animaux selon l'une quelconque des revendications 1 à 18, **caractérisées en ce que** les polymères superabsorbants présentent une taille de particule combinant une granulométrie fine avec une granulométrie plus grossière.

20. Compositions pour le traitement de conservation des peaux brutes d'animaux selon l'une quelconque des revendications 1 à 19, **caractérisées en ce qu'**elles contiennent divers additifs comme des bactéricides, antiseptiques, des agents de conservation, et analogues.

21. Compositions pour le traitement de conservation des peaux brutes d'animaux selon l'une quelconque des revendications 1 à 20, **caractérisées en ce qu'**elles contiennent au moins un bactéricide.

22. Compositions pour le traitement de conservation des peaux brutes d'animaux selon l'une quelconque des revendications 1 à 21, **caractérisées en ce qu'**elles contiennent au moins additif et/ou un bactéricidechoisis parmi les suivants et leurs mélanges:
- Phenonip (TM)
- Acticid L.A. (TM)

23. Compositions pour le traitement de conservation des peaux brutes d'animaux selon l'une quelconque des revendications 1 à 22, **caractérisées en ce qu'**elles contiennent les superabsorbants et agent hygroscopique suivants:
NaCl + SAP 1
(polyacrylate réticulé ; granulométrie 0,5 - 3 mm ) ou
SAP 2
(polyacrylate réticulé ; granulométrie 100 - 800 microns ) ou
SAP 1 + SAP 2 ou
(polyacrylate réticulé + copolymère acrylamide / acrylate, réticulé, granulométrie 0,1 à 3 mm )
SAP 3
(copolymère acrylamide, MADAME chlorométhylé, réticulé granulométrie 0,5 - 3 mm) ou
SAP 4
(copolymère acrylamide, ADAME chlorométhylé, réticulé granulométrie 0,5 - 3 mm)

24. Compositions pour le traitement de conservation des peaux brutes d'animaux selon l'une quelconque des revendications 1 à 23, **caractérisées en ce qu'**elles contiennent les agents suivants:
| | | |
|---|---|---|
| **SAP** | Aquasorb 3005 KL (TM) | acrylamide / acrylate réticulé |
| | | 200 g / kg de peau |
| **NaCl** | | 200 g / kg de peau. |

25. Procédé pour le traitement de conservation des peaux brutes d'animaux **caractérisé en ce qu'**il comprend au moins une étape de mise en contact de la peau avec une composition de conservation selon l'une quelconque des revendications 1 à 24.

26. Procédé pour le traitement de conservation des peaux brutes d'animaux, selon la revendication 25, **caractérisé en ce qu'**il comprend au moins une étape de mise en contact de la peau, sur la face opposée aux poils, avec une composition de conservation selon l'une quelconque des revendications 1 à 24.

27. Procédé pour le traitement de conservation des peaux brutes d'animaux, selon la revendication 25 ou 26, **caractérisé en ce que** la mise en contact est effectuée durant environ 24 h.

28. Peaux d'animaux, **caractérisées en ce qu'**elles ont été traitées, pour la conservation, par une composition selon l'une quelconque des revendications 1 à 24.

29. Peaux d'animaux, **caractérisées en ce qu'**elles ont été traitées, pour la conservation, par un procédé selon l'une quelconque des revendications 25 à 27.

30. Utilisation de polymère(s) superabsorbant(s) SAP pour la conservation des peaux d'animaux.

31. Utilisation de polymère(s) superabsorbant(s) SAP et d'un ou plusieurs agent(s) hygroscopique(s) pour la conservation des peaux d'animaux.

## Claims

1. Compositions for the preservative treatment of raw animal hides, wherein they contain at least a mixture of:
- at least one superabsorbent (co)polymer with a particle size of less than about 6 mm, preferably between 0.3 and 4 mm, and ideally between 0.5 and 3.15 mm, which is capable of absorbing the internal moisture of the raw hide when this (co)polymer is deposited on the surface of the hide, while leaving a sufficient amount of internal moisture necessary for the proper preservation of the hide, and
- at least one other hydrophilic agent,
- possibly bactericides, preservative agents and similar agents,
and wherein the monomers used to form the appropriate superabsorbent polymers are selected from the following:
(1). Monomers containing carboxyl groups: mono or polycarboxylic monoethylene-unsaturated acids, such as (meth)acrylic acid (i.e. acrylic acid or methacrylic acid), maleic acid, and fumaric acid.
(2). Monomers containing groups of an anhydride type of carboxylic acid: polycarboxylic anhydride acids with monoethylene unsaturation (such as maleic anhydride).
(3). Monomers containing carboxylic acid salts: water-soluble salts (alkaline metal salts, ammonium salts, amine salts etc.) of mono or polycarboxylic acids with monoethylene unsaturation (such as sodium (meth)acrylate, trimethylamine (meth)acrylate, triethanolamine (meth)acrylate, sodium maleate, methylamine maleate).
(4). Monomers containing sulfonic acid groups: aliphatic or aromatic vinylsulfonic acids (such as vinylsulfonic acid, allylsulfonic acid, vinyltoluene sulfonic acid, styrene sulfonic acid), (meth)acrylic sulfonic acids (such as sulfopropyl (meth)acrylate, 2-hydroxy-3-(meth)acryloxide propyl sulfonic acid).
(5). Monomers containing groups of sulfonic acid salts: alkaline metal salts, ammonium salts, monomer amine salts containing sulfonic acid groups as specified above.
(6). Monomers containing hydroxyl groups: types of alcohol with monoethylene unsaturation (such as (meth)allyl alcohol), ethers or esters of polyols with monoethylene unsaturation (alkylene glycols, glycerol, polyoxyalkylene polyols), such as hydroxyethyl (meth)acrylate, hydroxypropyl (meth)acrylate, triethylene glycol (meth)acrylate, ether of mono (meth)allyl of poly(oxyethylene oxypropylene) (in which the hydroxyl groups may be etherified or esterified).
(7). Monomers containing amide groups: (meth)acrylamide, N-alkyl (meth)acrylamides (such as N-methylacrylamide, N-hexylacrylamide), N,N-dialkyl (meth)acrylamides (such as N,N-dimethacrylamide, N,N-di-propylacrylamide), N-hydroxyalkyl (meth)acrylamides (such as N-methylol(meth)acrylamide, N-hydroxyethyl (meth)acrylamide), N,N-dihydroxyalkyl (meth)acrylamides (such as N,N-dihydroxyethyl (meth)acrylamide), vinyl lactams (such as N-vinylpyrrolidone).
(8). Monomers containing amino groups: esters containing amino groups (for example, esters of dialkylaminoalkyl, esters of dihydroxyalkyl aminoalkyl, esters of morpholinoalkyl etc.), mono or dicarboxylic acid with monoethylene unsaturation (such as dimethylaminoethyl (meth)acrylate, diethylaminoethyl (meth)acrylate, morpholinoethyl (meth)acrylate, dimethylaminoethyl fumarate), heterocyclic vinyl compounds (such as vinyl pyridines (for example, 2-vinyl pyridine, 4-vinyl pyridine, N-vinyl pyridine), N-vinyl imidazole).
(9). Monomers containing groups of quaternary ammonium salts: salts of N,N,N-trialkyl-N-(meth)acryloyloxyalkylammonium (such as N,N,N-trimethyl-N-(meth)acryloyloxyethylammonium chloride, N,N,N-triethyl-N-(meth) acryloyloxyethylammonium chloride, trimethyl ammonium 2-hydroxy-3-(meth)-acryloyl-oxypropyl chloride).

2. Compositions for the preservative treatment of raw animal hides, according to claim 1, **characterised in that** the superabsorbent polymers used are able to absorb the internal moisture of the raw hide when these polymers are deposited on the surface of the hide, while leaving a sufficient amount of internal moisture necessary for the proper preservation of the hide.

3. Compositions for the preservative treatment of raw animal hides, according to claim 1 or 2, **characterised in that** the superabsorbent polymers used are able to absorb the internal moisture of the raw hide when these polymers are deposited on the surface of the hide, while leaving a residual amount of moisture in the hide, ranging from 20 to 70% by weight, preferably about 50% by weight.

4. Compositions for the preservative treatment of raw animal hides, according to any of the claims 1 to 3, **characterised in that** the monomers used to form the appropriate superabsorbent polymers are selected from the following:
- acrylamide, acrylic acid, (meth)acrylic acid, sulfomethylated or chloromethylated dimethylaminoethyl acrylate,
- chloromethylated or sulfomethylated dimethylaminoethyl methacrylate.

5. Compositions for the preservative treatment of raw animal hides, according to any of the claims 1 to 4, **characterised in that** the superabsorbent polymers are selected from the following:
- cross-linked polyacrylamides
- cross-linked polyacrylates
- cross-linked acrylamide / acrylate copolymers- sulfomethylated or chloromethylated acrylamide / dimethylaminoethyl acrylate (ADAME) copolymers,
- sulfomethylated or chloromethylated acrylamide / dimethylaminoethyl methacrylate (MADAME) copolymers.
- cross-linked polymers of acrylic acid or methacrylic acid, cross-linked graft copolymers of the type polysaccharide / acrylic acid or methacrylic acid, acrylic acid or methacrylic acid / acrylamide / sulfonated acrylamide cross-linked terpolymers and their alkaline-metal or alkaline-earth salts,
for example, products of cross-linking of a homopolymer of acrylic acid or of a salt of this acid, of acrylic acid copolymers (or salt of acrylic acid) / methacrylic acid (or salt of methacrylic acid) and graft copolymers of starch / acrylic acid (or salt of this acid);
- hydrolyzates of polysaccharide / alkyl acrylate or methacrylate cross-linked graft copolymers, hydrolyzates of polysaccharide / acrylonitrile cross-linked graft copolymers,
- hydrolyzates of polysaccharide / acrylamide cross-linked copolymers, for example products of cross-linking of hydrolyzed starch / ethyl acrylate graft copolymers, of hydrolyzed starch / methyl methacrylate graft copolymers, of hydrolyzed starch / acrylonitrile graft copolymers, and of hydrolyzed starch / acrylamide graft copolymers;
- hydrolyzates of alkyl acrylate or methacrylate / vinyl acetate cross-linked copolymers, for example, products of cross-linking of hydrolyzed ethyl methacrylate / vinyl acetate copolymers and hydrolyzed methyl acrylate / vinyl acetate copolymers;
- hydrolyzates of cross-linked graft copolymers of starch / acrylonitrile / acrylamide / 2-methylpropane sulfonic acid;
- hydrolyzates of starch / acrylonitrile / vinyl sulfonic acid cross-linked graft copolymers; cross-linked sodium carboxymethyl cellulose and similar products and mixtures of these, preferably:
- cross-linked polymers of acrylic or methacrylic acid, polysaccharide / acrylic or methacrylic acid cross-linked graft copolymers, acrylic or methacrylic acid / acrylamide / sulfonated acrylamide cross-linked terpolymers.

6. Compositions for the preservative treatment of raw animal hides, according to any of claims 1 to 5, **characterised in that** they include mixtures of superabsorbent polymers as described or obtained in claims 1 to 5.

7. Compositions for the preservative treatment of raw animal hides, according to any of claims 1 to 6, **characterised in that** they include mixtures of superabsorbent polymers as described in claims 1 to 5, with different grain sizes, adapted to obtain an optimal coverage of the surface of the hide.

8. Compositions for the preservative treatment of raw animal hides, according to any of claims 1 to 7, **characterised in that** they include mixtures of superabsorbent polymers as described in claims 1 to 5, with a different chemical composition.

9. Compositions for the preservative treatment of raw animal hides, according to any of claims 1 to 8, **characterised in that** they include mixtures of superabsorbent polymers as described in claims 1 to 5, with different grain sizes and chemical composition.

10. Compositions for the preservative treatment of raw animal hides, according to any of claims I to 9, **characterised in that** they include mixtures of superabsorbent polymers as described in claims I to 9, and at least one hydrophilic or hygroscopic agent.

11. Compositions for the preservative treatment of raw animal hides, according to any of claims 1 to 10, **characterised in that** they include salt NaCl as a hygroscopic agent.

12. Compositions for the preservative treatment of raw animal hides, according to any of claims 1 to 11, **characterised in that** they include CaCl₂, MgCl₂ or KCl as a hygroscopic agent.

13. Compositions for the preservative treatment of raw animal hides, according to any of claims I to 12, **characterised in that** the ratio of the superabsorbent polymer to the other hygroscopic agent or agents is 80% to 20% by weight.

14. Compositions for the preservative treatment of raw animal hides, according to any of claims 1 to 13, **characterised in that** the ratio of the superabsorbent polymer to the other hygroscopic agent or agents is 65% to 35% by weight.

15. Compositions for the preservative treatment of raw animal hides, according to any of claims 1 to 13, **characterised in that** the ratio of the superabsorbent polymer to the other hygroscopic agent or agents is 50% to 50% by weight.

16. Compositions for the preservative treatment of raw animal hides, according to any of claims 1 to 15, **characterised in that** the superabsorbent polymers have a particle size smaller than about 6 mm, and preferably between 0.3 and 4 mm.

17. Compositions for the preservative treatment of raw animal hides, according to any of claims I to 16, **characterised in that** the superabsorbent polymers have a particle size of between 0.5 and 3 mm.

18. Compositions for the preservative treatment of raw animal hides, according to any of claims 1 to 17, **characterised in that** the superabsorbent polymers have a particle size of about 0.3 to I mm.

19. Compositions for the preservative treatment of raw animal hides, according to any of claims I to 18, **characterised in that** the superabsorbent polymers are of a particle size combining a fine grain size with a coarser grain size.

20. Compositions for the preservative treatment of raw animal hides, according to any of claims I to 19, **characterised in that** these compositions contain various additives such as bactericides, antiseptic agents, preservatives and similar agents.

21. Compositions for the preservative treatment of raw animal hides, according to any of claims I to 20, **characterised in that** these compositions contain at least one bactericide.

22. Compositions for the preservative treatment of raw animal hides, according to any of claims 1 to 21, **characterised in that** these compositions contain at least one additive and/or a bactericide, selected from the following and mixtures of them:
- Phenonip (Trademark)
- Acticid L.A. (Trademark)

23. Compositions for the preservative treatment of raw animal hides, according to any of claims I to 22, **characterised in that** these compositions contain the following superabsorbent polymers and hygroscopic agents:
NaCl + SAP I
(cross-linked polyacrylate; grain size 0.5 - 3 mm) or
SAP 2
(cross-linked polyacrylate; grain size 100 - 800 microns) or SAP 1 + SAP 2 or
(cross-linked polyacrylate + acrylamide / acrylate copolymer, cross-linked, particle size 0.1 to 3 mm) or SAP 3
(acrylamide copolymer, chloromethylated MADAME, cross-linked, grain size 0.5 - 3 mm) or
SAP 4
(acrylamide copolymer, chloromethylated ADAME, cross-linked, grain size 0.5 - 3 mm).

24. Compositions for the preservative treatment of raw animal hides, according to any of claims 1 to 23, **characterised in that** these compositions contain the following agents:
| | | |
|---|---|---|
| **SAP** | Aquasorb 3005 KL (TM) | cross-linked acrylamide/acrylate |
| | | 200 g per kg of hide |
| **NaCl:** | | 200 g per kg of hide. |

25. A process for the preservative treatment of raw animal hides, **characterised in that** this process includes at least one stage of bringing the hide into contact with a preservative composition according to any of claims 1 to 24.

26. A process for the preservative treatment of raw animal hides, according to claim 25, **characterised in that** this process includes at least one stage of bringing the flesh side of the hide into contact with a preservative composition according to any of claims 1 to 24.

27. A process for the preservative treatment of raw animal hides, according to claim 25 or 26, **characterised in that** this process brings the hide into contact with a preservative composition for a period of about 24 hours.

28. Animal hides, wherein they have been treated, for preservation, with a composition according to any of claims 1 to 24.

29. Animal hides, wherein they have been treated, for preservation, with a process according to any of claims 25 to 27.

30. Use of superabsorbent polymer(s) SAP for the preservation of animal hides.

31. Use of superabsorbent polymer(s) SAP and one or more hygroscopic agents for the preservation of animal hides.

## Patentansprüche

1. Zusammensetzungen für die Konservierungsbehandlung von unbehandelten Tierhäu ten, **dadurch gekennzeichnet, dass** diese wenigstens folgende Mischung enthalten:
- wenigstens ein stark absorbierendes Copolymer mit einer Partikelgröße geringer als ungefähr 6 mm, vorzugsweise zwischen 0,3 und 4 mm, bevorzugt zwischen 0,5 und 3,15 mm, fähig zur Absorption von eingelagertem Wasser in der unbehandelten Haut, wenn auf die Oberfläche der Haut aufgebracht, wobei jedoch eine interne Feuchtigkeit belassen wird, die für eine gute Konservierung der Haut notwendig ist, und von
- wenigstens einem weiteren hydrophilen Agens,
- gegebenenfalls von Bakteriziden, konservierenden Agenzien und Analoga dazu,
wobei die für die Bildung des stark absorbierenden Polymers verwendeten Monomere ausgewählt sind aus den Folgenden
(1). Carboxylgruppen enthaltende Monomere: Monosäuren oder Polycarboxylsäuren mit ungesättigtem Monoethylen, wie die Methacrylsäure (d.h. Acrylsäure oder Methacrylsäure), Maleinsäure und Fumarsäure.
(2). Monomere enthaltend Gruppen vom Typ Carboxylsäureanhydride: Polycarboxylsäureanhydride mit ungesättigtem Monoethylen (wie Maleinsäureanhydrid).
(3). Monomere enthaltend Carboxylsäuresalze: wasserlösliche Salze (Alkalimetallsalze, Ammoniumsalze, Aminsalze, etc.) von Mono- oder Polycarboxylsäuren mit ungesättigtem Monoethylen (wie Natriummethylacrylat, Trimethylaminmethacrylat, Triethanolaminmethacrylat, Natriummaleinat, Methylaminmalemat).
(4). Monomere enthaltend eine Sulfonsäuregruppe: aliphatische oder aromatische Vinylsulfonsäuren (wie Vinylsulfonsäure, Allylsulfonsäure, Vinyltoluensulfonsäure, Styrensulfonsäure, Methacrylsulfonsäure (wie Sulfonpropylmethacrylat, 2-Hydroxy-3-Methacryloxypropylsulfonsäure.
(5). Monomere enthaltend Gruppen von Sulfonsäuresalzen: Alkalimetallsalze, Ammoniumsalze, monomere Aminsalze enthaltend Sulfonsäure-Gruppen wie weiter unten angegeben.
(6). Monomere enthaltend Hydroxylgruppen: Alkohole mit ungesättigtem Monoethylen (wie Methylallylalkohol, die Äther oder Ester von Polyolen mit ungesättigtem Monoethylen (Alkylenglykol, Glycerol, Polyoxyalkylenpolyole), wie Hydroxyethylmethacrylat, Hydroxypropylmethacrylat, Triethylenglykolmethacrylat, Polyoxyethylenoxypropylenmonomethallyläther) (wobei darin die Hydroxylgruppen veräthert oder verestert sein können).
₍₇₎ Monomere Amidgruppe enthaltend: Methacrylamid, N-Alkylmetbacrylamid (wie das N-Methylacrylamid, N-Hexylacrylamid), N, N-Dialkylmethacrylamid (wie das N,N-Dimethylacrylamid, N,N-Di-n-Propylacrylamid), N- Hydroxylalkylmethacrylamid, (wie das N-Methylolmethacrylamid, N-Hydroxyethylmethacrylamid), N, N-Dihydroxyalkylmethacrylamid (wie das N,N-Dihydroxyethylmethacrylamid), Vinyllactam (wie das N- Vinylpyrrolidon).
(8). Monomere Aminogruppen enthaltend: Ester enthaltend Aminogruppen (zum Beispiel Dialkylaminoalkylester, Dihydroxyalkylaminoalkylester, Morpholinoalkylester, etc.) Mono- oder Dicarboxylsäuren mit ungesättigtem Monoethylen (wie Dimethylaminoethylmethacrylat, das Diethylaminoethylmethacrylat, Morpholinoalkylester, Dimethylaminoethylfumarat), heterozyklische Vinylverbindungen, (wie das Vinylpyridin, zum Beispiel 2-Vinylpyridin, 4-Vinylpyridin, N-Vinylpyridin), N-Vinyliraidazol.
(9). Monomere Gruppen von Quaternäre Ammoniumsalzen enthaltend: N,N,N- Trialkyl-N-Methacryloyloxyalkylammoniumsalz (wie das N,N,N-Trimethyl-N-Methacryloylaxyethylammoniumcltlorid, N,N,N-Triethyl-N- Methacryloyloxyethylammoni umchlorid, 2-Hydroxy-3-Methacryloyloxypropyltrimethylamoniumchlorid.

2. Zusammensetzungen zur Konservierungsbehandlung von unbehandelten Tierhäuten nach Anspruch 1, **dadurch gekennzeichnet, dass** die verwendeten stark absorbierenden Polymere diejenigen sind, welche zur Absorption von eingelagertem Wasser in der unbehandelten Haut geeignet sind, wenn auf die Oberfläche der Haut aufgebracht,
wobei jedoch eine interne Feuchtigkeit belassen wird, die für eine gute Konservierung der Haut notwendig ist.

3. Zusammensetzungen zur Konservierungsbehandlung von unbehandelten Tierhäuten nach einem der Ansprüche 1 oder 2, **dadurch gekennzeichnet, dass** die verwendeten stark absorbierende Polymere diejenigen sind, welche zur Absorption von eingelagertem Wasser der Tierhäute geeignet sind, wenn auf die Oberfläche der Haut aufgebracht, wobei jedoch eine Feuchtigkeit in der Haut zwischen 20 bis 70% belassen wird, vorzugsweise in der Größenordnung von 50%.

4. Zusammensetzungen zur Konservierungsbehandlung von unbehandelten Tierhäuten nach einem der Ansprüche 1 bis 3, **dadurch gekennzeichnet, dass** die verwendeten Monomere zur Bildung des stark absorbierenden Polymeres vorzugsweise ausgewählt sind aus den Folgenden:
- Acrylamide, Acrylsäure, Methacrylsäure, Sulfomethyl- oder Chlornnethyl-Dimethylaminoethylacrylat,
- Chlormethyl- oder Sulfomethyl-Dimethylaminoethylmethacrylat.

5. Zusammensetzungen zur Konservierungsbehandlung von unbehandelten Tierhäuten nach einem der Ansprüche 1 bis 4, **dadurch gekennzeichnet, dass** die stark absorbierenden oder superabsorbierende Polymere ausgewählt sind aus den Folgenden:
- vernetzte Polyacrylamide
- vernetzte Polyacrylate
- vernetzte Acrylamid/Acrylat Copolymere
- Acrylamid / Sulfomethyl- oder Chlorinethyl-DimethylaminoethylacryIat (ADAME) Copolymere
- Acrylamid / Sulfomethyl- oder Chlormethyl-Diemthylaminoethylmethacrylat (MADAME) Copolymere
- vernetzte Copolymere von Acrylsäure oder Methacrylsäure, vernetzte Propfcopolymere vom Typ Polysaccharid / Acrylsäure oder Methacrylsäure, vernetzte ternäre Copolymere von Acryl- oder Methacrylsäure / / Acrylamid/ Sulfonacrylamid und deren Alkalimetall- oder Erdalkalisalze, zum Beispiel die Produkte der Vernetzung von einem Acrylsäure Homopolymer oder von einem Salz dieser Säure, von Acrylsäure Copolymeren (oder dem Salz der Acrylsäure)/Methacrylsäure (oder dem Salz der Methacrylsäure) und von Propfcopolymeren Stärke/Acrylsäure ( oder dem Salz dieser Säure)
- der Hydrolysate vernetzter Propfcopolymere von Polysaccharid/Alkyl-Acrylat oder - Methacrylat, der Hydrolysate vernetzter Propfcopolymere von Polysaccharid/Acrylonitril
- der Hydrolysate vernetzter Copolymere von Polysaccharid/Acrylamid, zum Beispiel die Produkte der Vernetzung der hydrolysierten Propfcopolymere Stärke/ Ethylacrylat, der hydrolysierten Pfropfcopolyrnere Stärke/ Methylmethacrylat, der hydrolysierten Propfcopolymere Stärke/ Acrylonitril, und der hydrolysierten Propfcopolymere Stärke/ Acrylamid
- der Hydrolysate vernetzter Copolymere von Alkyl-Acrylat oder - Methacrylat/Vinylacetat, zum Beispiel die Produkte der Vernetzung von hydrolysierten Copolymere von Ethylmethacrylat/Vinylacetat und von hydrolysierten Copolymere von 1Methylacrylat/Vinylacetat und der hydrolysierten Copolymere Methylacrylat/Vinylacetat;
- der Hydrolysate vernetzter Propfcopolymere von Stärke/ Acrylonitril/ Acrylamid/2-Methylpropansulfonsäure;
- der Hydrolysate vernetzter Propfcopolymere von Stärke /Acrylonitril/ Vinylsulfonsäure; vernetzter Natriumcarboxymethylcellulose und analogen Produkten und deren Mischungen, bevorzugt:
- vernetzte Polymere der Acryl- oder Methacrylsäure; vernetzte Propfcopolymere von Polysaccharid/Acryl- oder Methacrylsäure; vernetzte ternäre Copolymere von Acryl-oder Methacrylsäure / Acrylamid/ Sulfonacrylamid.

6. Zusammensetzungen für die Konservierungsbehandlung von unbehandelten Tierhäuten nach einem der Ansprüche 1 bis 5, **dadurch gekennzeichnet, dass** diese eine Mischung der in den Ansprüche 1 bis 5 beschriebenen oder erhaltenen stark absorbierenden Polymere umfassen.

7. Zusammensetzungen für die Konservierungsbehandlung von unbehandelten Tierhäuten nach einem der Ansprüche 1 bis 6, **dadurch gekennzeichnet, dass** diese eine Mischung der in den Ansprüchen 1 bis 5 beschriebenen stark absorbierenden Polymere, umfassen, mit unterschiedlichen Korngrößen, die angepasst sind, um eine optimale Bedeckung der Hautoberfläche zu erreichen.

8. Zusammensetzungen für die Konservierungsbehandlung von unbehandelten Tierhäuten nach einem der Ansprüche 1 bis 7, **dadurch gekennzeichnet, dass** diese eine Mischung der den Ansprüchen 1 bis 5 beschriebenen stark absorbierenden Polymere umfassen, mit unterschiedlicher chemischer Zusammensetzung.

9. Zusammensetzungen für die Konservierungsbehandlung von unbehandelten Tierhäuten nach einem der Ansprüche 1 bis 8, **dadurch gekenntzeichnet, dass** diese eine Mischung der in den Ansprüchen 1 bis 5 beschriebenen stark absorbierenden Polymere umfassen, mit unterschiedlicher Korngröße und chemischer Zusammensetzung.

10. Zusammensetzungen für die Konservierungsbehandlung von unbehandelten Tierhäuten nach einem der Ansprüche 1 bis 9, **dadurch gekennzeichnet, dass** diese eine Mischung der in den Ansprüche 1 bis 9 beschriebenen stark absorbierenden Polymere umfassen und wenigstens ein hydrophiles oder hygroskopisches Agens.

11. Zusammensetzungen für die Konservierungsbehandlung von unbehandelten Tierhäuten nach einem der Ansprüche 1 bis 10, **dadurch gekennzeichnet, dass** diese als hygroskopisches Agens das Salz NaCl umfassen.

12. Zusammensetzungen für die Konsetvierungsbehandlung von unbehandelten Tierhäuten nach einem der Ansprüche 1 bis 11, **dadurch gekennzeichnet, dass** diese als hygroskopisches Agens umfassen CaCl₂, MgCl₂, KCl.

13. Zusammensetzungen für die Konservierungsbehandlung von unbehandelten Tierhäuten nach einem der Ansprüche 1 bis 12, **dadurch gekennzeichnet, dass** das Verhältnis zwischen dem stark absorbierendem Polymer und dem oder den anderen hygroskopischen Agenz(ien) zwischen 80 und 20 % liegt.

14. Zusammensetzungen für die Konservierungsbehandlung von unbehandelten Tierhäuten nach einem der Ansprüche 1 bis 13, **dadurch gekennzeichnet, dass** das Verhältnis zwischen dem stark absorbierendem Polymer und dem oder den anderen hygroskopischen Agenz(ien) zwischen 65 und 35 % liegt.

15. Zusammensetzungen für die Konservierungsbehandlung von unbehandelten Tierhäuten nach einem der Ansprüche 1 bis 14, **dadurch gekennzeichnet, dass** das Verhältnis zwischen dem stark absorbierendem Polymer und dem oder den anderen hygroskopischen Agenz(ien) im Bereich von 50 / 50 % liegt.

16. Zusammensetzungen für die Konservierungsbehandlung von unbehandelten Tierhäuten nach einem der Ansprüche 1 bis 15, **dadurch gekennzeichnet, dass** das stark absorbierende Polymer eine Partikelgröße von ungefähr 6 mm aufweist, vorzugsweise enthalten zwischen 0,3 bis 4 mm.

17. Zusammensetzungen für die Konservierungsbehandlung von unbehandelten Tierhäuten nach einem der Ansprüche 1 bis 16, **dadurch gekennzeichnet, dass** das stark absorbierende Polymer eine Partikelgröße enthalten zwischen 0,5 und 3 mm aufweist.

18. Zusammensetzungen für die Konservierungsbehandlung von unbehandelten Tierhäuten nach einem der Ansprüche 1 bis 17, **dadurch gekennzeichnet, dass** das stark absorbierende Polymer eine Partikelgröße im Bereich von 0,3 bis 1 mm aufweist.

19. Zusammensetzungen für die Konservierungsbehandlung von unbehandelten Tierhäuten nach einem der Ansprüche 1 bis 18, **dadurch gekennzeichnet, dass** das stark absorbierende Polymer eine Partikelgröße kombiniert aus einer feinen Korngröße mit einer gröberen Korngröße aufweist.

20. Zusammensetzungen für die Konservierungsbehandlung von unbehandelten Tierhäuten nach einem der Ansprüche 1 bis 19 **dadurch gekennzeichnet, dass** diese verschiedene Additive enthalten wie Bakterizide, Antiseptika, konservierende Agenzien und Analoga.

21. Zusammensetzungen für die Konservierungsbehandlung von unbehandelten Tierhäuten nach einem der Ansprüche 1 bis 20, **dadurch gekennzeichnet, dass** diese wenigstens ein Bakterizid enthalten.

22. Zusammensetzungen für die Konservierungsbehandlung von unbehandelten Tierhäuten nach einem der Ansprüche 1 bis 21, **dadurch gekennzeichnet, dass** diese wenigstens ein Additiv und/oder ein Bakterizid enthalten, ausgewählt aus den folgenden und deren Mischungen:
Phenonip ^{™}
- Akticid L.A. ^{™}

23. Zusammensetzungen für die Konservierungsbehandlung von unbehandelten Tierhäuten nach einem der Ansprüche 1 bis 22 **dadurch gekennzeichnet, dass** diese ein stark absorbierendes und hygroskopisches Agens der folgenden enthalten;
NaCl + SAP 1
(vernetztes Polyacrylat; Korngröße 0,5 - 3 mm) oder
SAP 2
(vernetztes Polyacrylat; Korngröße 100 - 800 Mikron) oder
SAP 1 + SAP 2 oder
(vernetztes Polyacrylat + vernetztes Copolymer Acrylamid/Acrylat, Korngröße 0,1 bis 3 mm)
SAP 3
(vernetztes Copolymer Acrylamid, Chlormethyl MADAME, Korngröße 0,5 bis 3 mm) oder
SAP 4
vernetztes Copolymer Acrylamid, Chlormethyl ADAME, Korngröße 0,5 bis 3 mm)

24. Zusammensetzungen für die Konsetvierungsbehandlung von unbehandelten Tierhäuten nach einem der Ansprüche 1 bis 23, **dadurch gekennzeichnet, dass** diese eines der vorliegenden Agenzien enthalten:
| | | |
|---|---|---|
| **SAP** | Aquasorb 3005 KL ^{™} | vernetztes Acrylamid/Acrylat |
| | | 200 g/kg Haut |
| **NaCl** | | 200 g/kg Haut |

25. Verfahren zur Konservierungsbehandlung von unbehandelten Tierhäuten **dadurch gekennzeichnet, dass** dieses wenigstens einen Schritt des Inkontaktbringens der Haut mit einer Zusammensetzung zur Konservierung nach einem der Ansprüche 1 bis 24 umfasst.

26. Verfahren zur Konservierungsbehandlung von unbehandelten Tierhäuten nach Anspruch 25, **dadurch gekennzeichnet, dass** dieses wenigstens einen Schritt des Inkontaktbringens der Haut mit der zur Haarseite entgegengesetzten Seite mit einer Zusammensetzung zur Konservierung nach einem der Ansprüche 1 bis 24 umfasst.

27. Verfahren zur Konservierungsbehandlung von unbehandelten Tierhäuten nach einem der Ansprüche 25 oder 26, **dadurch gekennzeichnet, dass** das Inkontaktbringen während etwa 24 Stunden angewendet wird.

28. Tierhäute **dadurch gekennzeichnet, dass** diese zur Konservierung mit einer Zusammensetzung nach einem der Ansprüche 1 bis 24 behandelt wurden.

29. Tierhäute **dadurch gekennzeichnet, dass** diese zur Konservierung mit einem Verfahren nach einem der Ansprüche 25 bis 27 behandelt wurden.

30. Verwendung von stark absorbierendem/n Polymer(en) SAP zur Konservierung von Tierhäuten.

31. Verwendung von stark absorbierendem/n Polymer(en) SAP und eines oder mehreren zusätzlichem/n hygroskopischen Agenz(ien) zur Konservierung von Tierhäuten.
